# FASCICULE DE BREVET EUROPEEN

(11) **EP 1 178 894 B1**
(45) Date de publication et mention de la délivrance du brevet: **09.04.2003**
(21) Numéro de dépôt: 00929619.5
(22) Date de dépôt: 17.05.2000
(51) Int. Cl.: B60K 11/04

(54) **DISPOSITIF DE FIXATION D'UN RADIATEUR SUR UN SUPPORT D'UN VEHICULE**
VORRICHTUNG ZUR BEFESTIGUNG EINES KÜHLERS AN EINER FAHRZEUGHALTERUNG
DEVICE FOR MOUNTING A RADIATOR ON A VEHICLE SUPPORT

(30) Priorité: 20.05.1999 FR 9906405
(43) Date de publication de la demande: 13.02.2002
(73) Titulaire: PEGUFORM FRANCE, 27950 Saint Marcel (FR)
(72) Inventeur: Pelage, Lucien, 27200 Vernon (FR); Brogly, Sébastien, 27950 St Just (FR)
(74) Mandataire: Texier, Christian
(86) Numéro de dépôt international: FR0001314
(87) Numéro de publication internationale: WO00071376

(56) Documents cités:
- DE-A- 19 744 173
- US-A- 5 544 714

## Description

L'invention concerne la fixation d'un organe de refroidissement tel qu'un radiateur ou un échangeur air-air sur un véhicule.

Dans un véhicule, l'organe de refroidissement, par exemple le radiateur, est souvent fixé à un support dit façade avant technique. Dans un dispositif de fixation connu, on introduit des reliefs inférieurs du radiateur dans des cavités correspondantes de la façade. Puis on enfile sur des pions supérieurs du radiateur des pattes de fixation. Ces dernières sont ensuite fixées à la façade par une vis. Ce dispositif de fixation a pour inconvénient qu'il nécessite l'accès à la face arrière de la façade pour enfiler les pattes sur les pions et à sa face avant pour le serrage des vis. De plus, il est difficile de réaliser un bridage sans effort, et sans défaut de parallélisme du radiateur sur la façade du fait que les pattes ne sont pas fixes en rotation par rapport au radiateur. Ce dispositif requiert donc un temps de montage élevé, présente des risques en qualité et entraîne un coût important. D'autres dispositifs de fixation sont décrits dans DE 197 44 173 et US 5 544 714. DE 197 44 173 sert de base à la présentation en deux-partie de la revendication 1.

Un but de l'invention est de fournir un dispositif de fixation accélérant la fixation de l'organe de refroidissement à la façade en réduisant le coût et en améliorant la qualité de la fixation.

En vue de la réalisation de ce but, on prévoit selon l'invention un dispositif de fixation d'un organe de refroidissement dans un véhicule, comportant un support présentant un orifice et un bord libre, et une pièce de fixation présentant un orifice et un bord libre, dans lequel le support présente une échancrure s'étendant de son orifice à son bord libre, et la pièce de fixation présente une échancrure s'étendant de son orifice à son bord libre, la pièce de fixation étant apte à être montée à rotation sur le support avec les orifices coaxiaux.

Ainsi, la pièce de fixation étant reçue sur le support avec les deux échancrures en correspondance, il suffit d'introduire le pion de l'organe de refroidissement dans les échancrures jusque dans l'orifice de la pièce de fixation, puis de faire tourner celle-ci pour décaler les échancrures. Dès lors, le pion est prisonnier dans l'orifice de la pièce de fixation. On obtient donc la fixation du pion de façon simple et rapide. Le bridage n'implique pas d'effort important dans la pièce et ne génère pas de défaut de parallélisme. Le coût du dispositif de fixation est réduit.

Avantageusement, la pièce de fixation présente une gorge apte à recevoir un chant de l'orifice du support.

Avantageusement, la pièce de fixation est apte à être reçue dans l'orifice du support par clipsage suivant une direction parallèle à un axe de cet orifice.

Le montage de la pièce de fixation sur le support est donc simple à réaliser.

Avantageusement, la pièce de fixation comporte au moins une patte pour manoeuvrer à rotation la pièce montée sur le support.

Avantageusement, le support présente au moins une deuxième échancrure pour le passage de la patte.

Ainsi, on peut clipser la pièce de fixation sans avoir à faire passer la patte dans l'échancrure principale. Par exemple, l'échancrure de passage de la patte sera disposée de sorte qu'on clipse la pièce de fixation directement avec les deux échancrures principales en correspondance.

Avantageusement, la pièce de fixation présente une face interne formée par un élément réalisé en un matériau amortisseur de vibrations mécaniques.

Ainsi, on réduit la transmission des vibrations mécaniques entre le support et l'élément de refroidissement.

Avantageusement, la pièce de fixation comporte un corps auquel l'élément amortisseur est fixé.

Ainsi, la pièce de fixation peut être réalisée en deux matières, par co-moulage ou surmoulage par exemple.

Avantageusement, la pièce de fixation est une bague.

On prévoit également selon l'invention un sous-ensemble pour véhicule comprenant un dispositif selon l'invention.

Avantageusement, le sous-ensemble comporte une façade formant le support.

Avantageusement, la façade est réalisée en matière plastique renforcée par des fibres.

Avantageusement, le sous-ensemble comporte un organe de refroidissement présentant un pion apte à être reçu dans l'orifice de la pièce de fixation montée sur le support, à travers les échancrures.

D'autres caractéristiques et avantages de l'invention apparaîtront encore dans la description suivante d'un mode préféré de réalisation et d'une variante donnés à titre d'exemples non limitatifs. Aux dessins annexés :
- la figure 1 est une vue en perspective éclatée de l'environnement d'une façade avant de véhicule ;
- la figure 2 est une vue de dessus d'une pièce de fixation dans un mode préféré de réalisation du dispositif selon l'invention ;
- la figure 3 est une vue en coupe axiale suivant le plan III-III de la pièce de la figure 2 ;
- les figures 4, 5 et 6 sont des vues partielles en perspective du dispositif de fixation selon le présent mode de réalisation illustrant trois étapes du montage du dispositif et de la fixation de l'élément de refroidissement ; et
- les figures 7 et 8 sont deux vues analogues aux figures 2 et 3 illustrant une variante de réalisation.

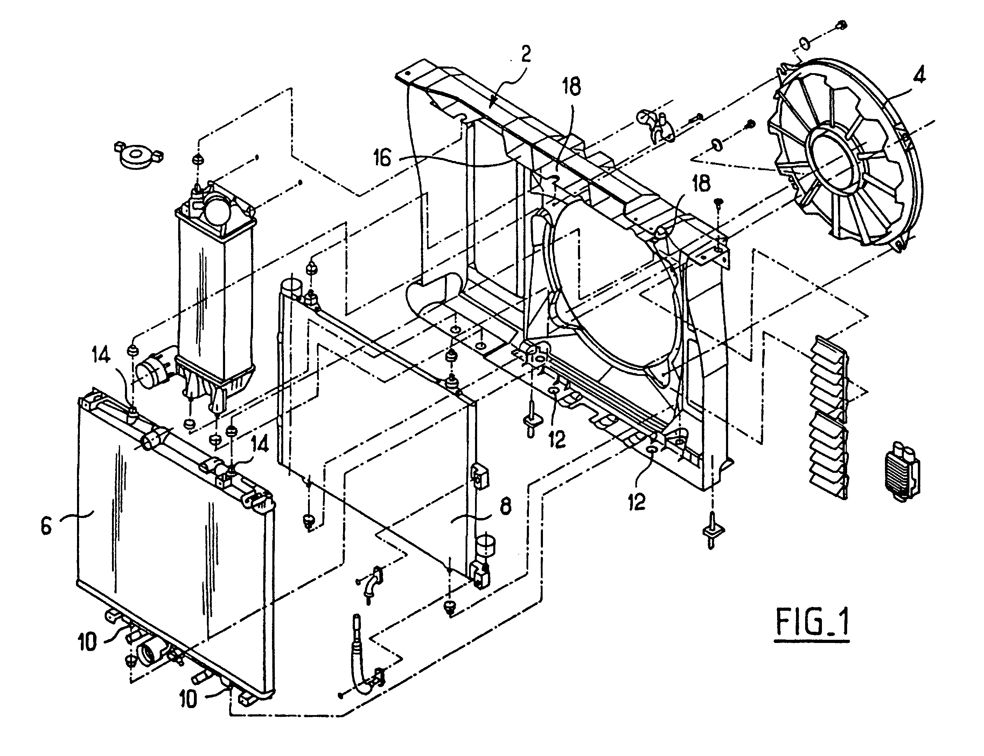

On a illustré à la figure 1 l'environnement d'une façade avant technique de véhicule automobile. La façade 2 est destinée à supporter un groupe motoventilateur 4 fixé en partie arrière dans un orifice central de la façade et un dispositif de refroidissement 6, ici un radiateur, ainsi qu'un condenseur 8 interposé entre le radiateur 6 et la façade 2, ces trois éléments s'étendant verticalement.

Le radiateur 6 a une forme générale de parallélépipède rectangle très aplati suivant une direction horizontale. Il porte à son bord inférieur horizontal deux plots 10 d'axes verticaux destinés à être reçus dans deux orifices inférieurs 12 de la façade Z. Il porte à son bord supérieur horizontal deux pions 14 d'axes verticaux.

La façade 2 comprend une paroi 16 s'étendant horizontalement vers l'arrière à partir d'une paroi verticale principale de la façade. Aux endroits destinés à fixer les deux pions 14, la paroi 16 présente deux orifices circulaires 18. La fixation des pions aux orifices étant identique pour chacun de ceux-ci, nous ne mentionnerons dans la suite de la description qu'un pion 14 et son orifice de fixation 18.

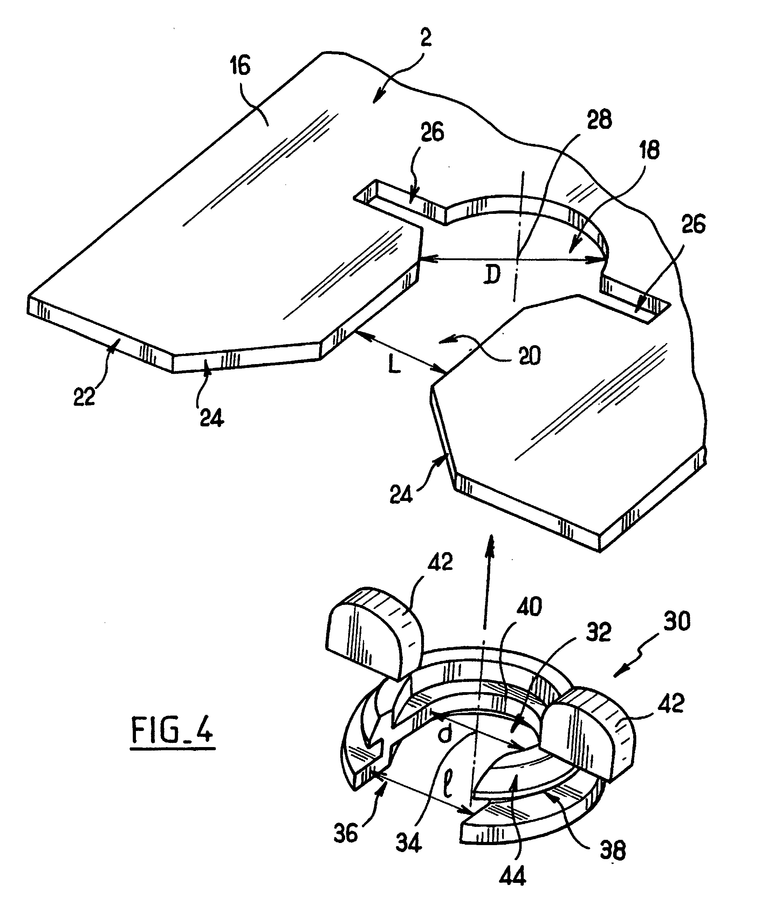

En référence à la figure 4, chaque orifice 18 est associé une échancrure 20 à bords droits parallèles, s'étendant depuis l'orifice 18 jusqu'à un bord libre 22 de la paroi 16. Des chanfreins 24 sont ménagés à la jonction de l'échancrure 20 avec le bord libre 22. L'échancrure a une largeur L inférieure à un diamètre D de l'orifice 18. La paroi 16 présente en outre deux échancrures secondaires 26 s'étendant dans la paroi 16 à partir de l'orifice 18. Les deux échancrures secondaires sont ici diamétralement opposées l'une à l'autre par rapport à un axe 28 de l'orifice.

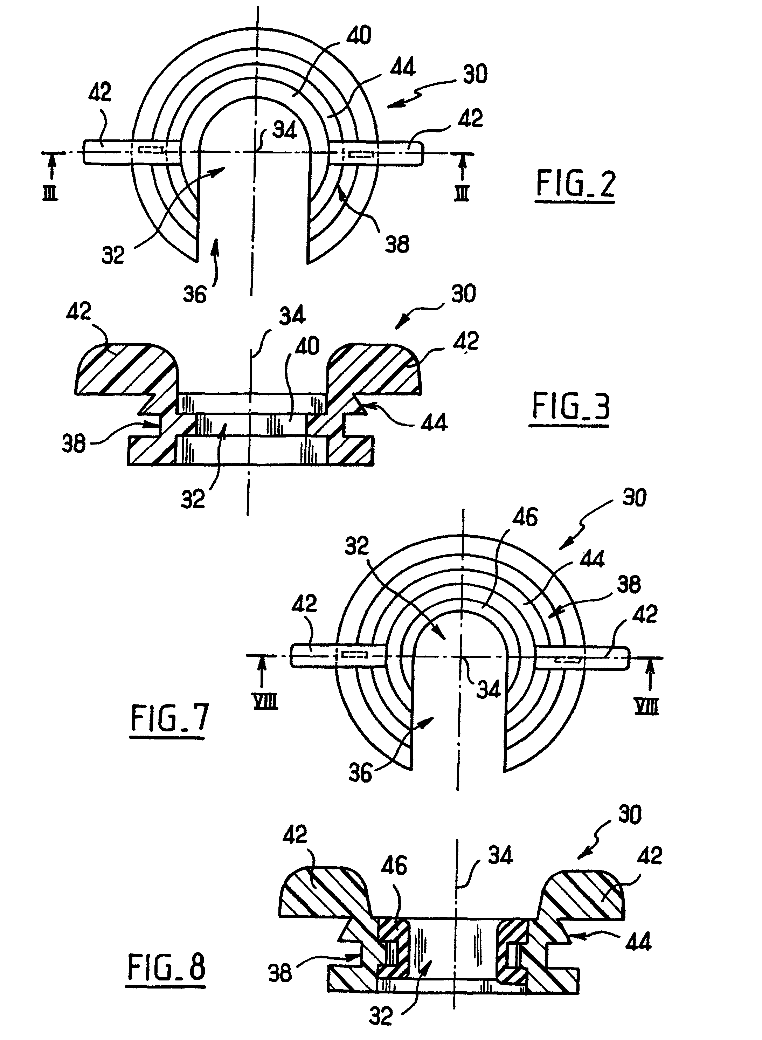

En référence aux figures 2 à 4, le dispositif comprend pour chaque orifice 18 une pièce de fixation qui est ici une bague 30. La bague a une forme générale annulaire. Elle présente en son centre un orifice 32 d'axe 34. Elle présente en outre une échancrure 36 s'étendant depuis l'orifice 32 jusqu'à un bord externe libre de la bague de sorte que la bague ne s'étend que sur un arc de cercle et est ouverte latéralement. L'échancrure 36 a une largeur l ici égale au diamètre d de l'orifice 32. En outre, le diamètre d de l'orifice 32 et la largeur l de l'échancrure 36 sont égaux à la largeur L de l'échancrure principale 20 de la paroi 16.

La bague 30 présente sur sa face externe une gorge 38 à profil en « U » à fond plat. Elle présente une rainure interne circonférentielle 40. La bague porte deux pattes 42 s'étendant en saillie de la face supérieure et du contour externe de la bague. Les deux pattes 42 sont généralement plates et coplanaires, et sont diamétralement opposées de part et d'autre de l'axe 34. Du côté de la face supérieure de la bague, c'est-à-dire du côté des pattes 42, la bague présente un chanfrein 44. Le diamètre externe de la bague au fond de la gorge 38 est égal au diamètre D de l'orifice 18 de la paroi 16.

Préalablement à la fixation du radiateur 6 à la façade 2, on peut avantageusement monter chaque bague 30 sur la façade. Pour cela, on amène la bague 30 sous l'orifice 18 de la paroi 16, comme sur la figure 4. On positionne la bague de sorte que les pattes 42 sont à la verticale des échancrures secondaires 26 respectives et que les échancrures principales 20 et 36 sont à la verticale l'une de l'autre, les deux axes 28 et 34 étant confondus.

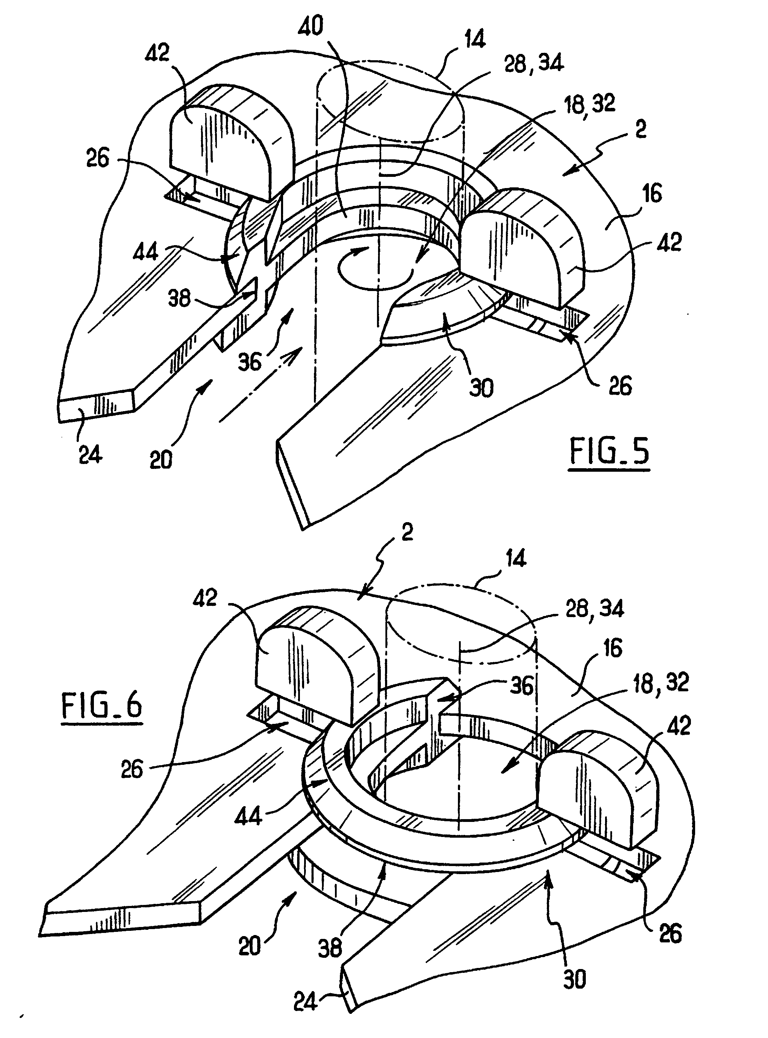

On place le chanfrein 44 en appui contre l'orifice 18 (ce qui facilite le centrage mutuel des deux éléments) et les pattes 42 dans les échancrures secondaires 26. Une poussée verticale de bas en haut sur la bague 30 produit par élasticité grâce à l'effet de rampe du chanfrein 44 sur le bord de l'orifice 18, un léger resserrement de l'arc de cercle constituant la bague, qui suffit à installer la bague dans l'orifice par clipsage dans la position de la figure 5. Dans cette position, le chant de l'orifice 18 s'étend dans le fond de la gorge 38, les flancs de la gorge étant respectivement au-dessus et au-dessous de la paroi 16. Les pattes 42 s'étendent au-dessus des échancrures secondaires 26 qu'elles ont traversées. Les échancrures principales 20 et 36 sont en correspondance et dans le prolongement l'une de l'autre. Bien que cela ne soit pas encore nécessaire à ce stade de l'assemblage, la bague 30 se trouve ainsi montée mobile à rotation sur la paroi 16 autour des axes 28, 34 confondus.

Ensuite, pour fixer le radiateur 6 à la façade 2, on introduit les plots inférieurs 10 dans les orifices inférieurs 12 de la façade. Pour cette opération, le radiateur est incliné par rapport à la façade verticale. Puis, redressant le radiateur en direction de la façade, on introduit les pions supérieurs 14 dans les échancrures respectives 20, 36 jusque dans les orifices 32 des bagues. Sur les figures 5 et 6, le pion 14 a été illustré en traits mixtes. Cette introduction est facilitée par le guidage assuré par les chanfreins 24. Il suffit ensuite de faire tourner chaque bague 30 à rotation dans son logement au moyen des pattes de manoeuvre 42 autour des axes 28, 34 d'un angle suffisant pour supprimer la correspondance des échancrures principales 20, 36 et ainsi retenir prisonnier le pion 14 dans la bague. Cet angle sera par exemple de 90 ou 180° comme sur la figure 6.

La façade 2 est ici en une matière plastique telle que du polypropylène renforcé par des fibres de verre longues. Chaque bague 30 est en matière plastique et d'une seule pièce.

On a illustré aux figures 7 et 8 une variante de réalisation de la bague 30. Celle-ci comprend cette fois un corps en matière plastique sensiblement identique au précédent, ainsi qu'un élément 46 en arc de cercle en matériau amortissant les vibrations, par exemple en élastomère. Cet élément est profilé en « U », le « U » étant ouvert vers l'extérieur et monté sur la rainure 40 qu'il recouvre. L'élément 46 constitue ainsi la face interne de la bague. La bague 30 vient en contact avec le pion 14 par le seul élément 46, ce qui contribue à amortir la transmission des vibrations mécaniques de l'un à l'autre. Le diamètre intérieur d de la bague sera cette fois mesuré sur l'élément 46. On donnera donc au corps en matière plastique un diamètre intérieur plus grand que dans le précédent mode.

Bien entendu, on pourra apporter à l'invention de nombreuses modifications sans sortir du cadre de celle-ci.

Le chanfrein 44 pourra être ménagé sur l'orifice 18.

On pourra agencer la bague pour la fixer à la paroi non par clipsage mais en l'introduisant latéralement dans l'échancrure principale 20 : la gorge 38 aura alors un diamètre variable en fonction de la zone de gorge considérée, la zone de plus petit diamètre servant à l'introduction dans l'échancrure 20.

La pièce de fixation pourra avoir une forme générale autre que celle d'une bague.

On pourra disposer les pattes 42 sous la bague et ainsi ne pas les faire pénétrer dans la paroi 16.

La bague 30 pourra être montée à rotation sur la paroi 16 avec les orifices 18, 32 coaxiaux mais distants l'un de l'autre.

## Revendications

1. Dispositif de fixation d'un organe de refroidissement (6) dans un véhicule, le dispositif comportant :
- un support (2) présentant un orifice (18) et un bord libre (22) ; et
- une pièce de fixation (30) présentant un orifice (32) et un bord libre,
**caractérisé en ce que** :
- le support (2) présente une échancrure (20) s'étendant de son orifice (18) à son bord libre. (22) ; et
- la pièce de fixation (30) présente une échancrure (36) s'étendant de son orifice (32) à son bord libre,
la pièce de fixation (30) étant apte à être montée à rotation sur le support (2) avec les orifices (18, 32) coaxiaux.

2. Dispositif selon la revendication 1, **caractérisé en ce que** la pièce de fixation (30) présente une gorge (38) apte à recevoir un chant de l'orifice (18) du support (2).

3. Dispositif selon la revendication 1 ou 2, **caractérisé en ce que** la pièce de fixation (30) est apte à être reçue dans l'orifice (18) du support par clipsage suivant une direction parallèle à un axe (28) de cet orifice.

4. Dispositif selon l'une quelconque des revendications 1 à 3, **caractérisé en ce que** la pièce de fixation (30) comporte au moins une patte (42) pour manoeuvrer à rotation la pièce montée sur le support (2).

5. Dispositif selon la revendication 4, **caractérisé en ce que** le support (2) présente au moins une deuxième échancrure (26) pour le passage de la patte (42).

6. Dispositif selon l'une quelconque des revendications 1 à 5, **caractérisé en ce que** la pièce de fixation (30) présente une face interne formée par un élément (46) réalisé en un matériau amortisseur de vibrations mécaniques.

7. Dispositif selon la revendication 6, **caractérisé en ce que** la pièce de fixation (30) comporte un corps auquel l'élément amortisseur (46) est fixé.

8. Dispositif selon l'une quelconque des revendications 1 à 7, **caractérisé en ce que** la pièce de fixation (30) est une bague.

9. Sous-ensemble pour véhicule, **caractérisé en ce qu'**il comprend un dispositif selon l'une quelconque des revendications 1 à 8.

10. Sous-ensemble selon la revendication 9, **caractérisé en ce qu'**il comporte une façade (2) formant le support.

11. Sous-ensemble selon la revendication 10, **caractérisé en ce que** la façade (2) est réalisée en matière plastique renforcée par des fibres.

12. Sous-ensemble selon l'une quelconque des revendications 9 à 11, **caractérisé en ce qu'**il comporte un organe de refroidissement (6) présentant un pion (14) apte à être reçu dans l'orifice (32) de la pièce de fixation montée sur le support (2), à travers les échancrures (20, 36).

## Claims

1. A system for fixing a cooling member (6) to a vehicle, the system comprising:
- a support (2) having an orifice (18) and a free edge (22); and
- a fixing piece (30) presenting an orifice (32) and a free edge;
the system being **characterized in that**:
- the support (2) presents a notch (20) extending from its orifice (18) to its free edge (22); and
- the fixing piece (30) presents a notch (36) extending from its orifice (32) to its free edge;
the fixing piece (30) being suitable for being mounted to turn relative to the support (2) with the orifices (18, 32) being coaxial.

2. A system according to claim 1, **characterized in that** the fixing piece (30) has a groove (38) suitable for receiving an edge of the orifice (18) of the support (2).

3. A system according to claim 1 or claim 2, **characterized in that** the fixing piece (30) is suitable for being received in the orifice (18) of the support by snap-fastening in a direction parallel to an axis (28) of said orifice.

4. A system according to any one of claims 1 to 3, **characterized in that** the fixing piece (30) has at least one tab (42) for turning the piece when mounted on the support (2).

5. A system according to claim 4, **characterized in that** the support (2) presents at least one second notch (26) for passing the tab (42).

6. A system according to any one of claims 1 to 5, **characterized in that** the fixing piece (30) has an inside face formed by an element (46) made of a material for damping mechanical vibration.

7. A system according to claim 6, **characterized in that** the fixing piece (30) comprises a body to which the damping element (46) is fixed.

8. A system according to any one of claims 1 to 7, **characterized in that** the fixing piece (30) is a ring.

9. A vehicle subassembly, **characterized in that** it includes a system according to any one of claims 1 to 8.

10. A subassembly according to claim 9, **characterized in that** it includes a facade (2) forming the support.

11. A subassembly according to claim 10, **characterized in that** the facade (2) is made of a fiber-reinforced plastics material.

12. A subassembly according to any one of claims 9 to 11, **characterized in that** it includes a cooling member (6) presenting a peg (14) suitable for being received in the orifice (32) of the fixing piece mounted on the support (2) through the notches (20, 36).

## Patentansprüche

1. Vorrichtung zur Befestigung eines Kühlorgans (6) in einem Fahrzeug, wobei die Vorrichtung folgende Merkmale
aufweist:
- einen Träger (2), der eine Öffnung (18) und einen freien Rand (22) aufweist, und
- ein Befestigungsstück (30), das eine Öffnung (32) und einen freien Rand aufweist,
**dadurch gekennzeichnet, daß**:
- der Träger (2) einen bogenförmigen Ausschnitt (20) aufweist, der sich von seiner Öffnung (18) bis zu seinem freien Rand (22) erstreckt, und
- das Befestigungsstück (30) einen bogenförmigen Ausschnitt (36) aufweist, der sich von seiner Öffnung (32) bis zu seinem freien Rand erstreckt,
wobei das Befestigungsstück (30) dazu eingerichtet ist, mit koaxialen Öffnungen (18, 32) zur Drehung auf dem Träger (2) angebracht zu werden.

2. Vorrichtung nach Anspruch 1, **dadurch gekennzeichnet, daß** das Befestigungsstück (30) eine Nut (38) aufweist, die dazu eingerichtet ist, eine Kante der Öffnung (18) des Trägers (2) aufzunehmen.

3. Vorrichtung nach Anspruch 1 oder 2, **dadurch gekennzeichnet, daß** das Befestigungsstück (30) dazu eingerichtet ist, in der Öffnung (18) des Trägers durch Einrasten in einer Richtung parallel zu einer Achse (28) dieser Öffnung aufgenommen zu werden.

4. Vorrichtung nach irgendeinem der Ansprüche 1 bis 3, **dadurch gekennzeichnet, daß** das Befestigungsstück (30) mindestens eine Klaue bzw. Leiste (42) aufweist, um das auf dem Träger (2) montierte Stück zur Drehung zu betätigen.

5. Vorrichtung nach Anspruch 4, **dadurch gekennzeichnet, daß** der Träger (2) mindestens einen zweiten, bogenförmigen Ausschnitt (26) aufweist, um die Leiste (42) durchzulassen.

6. Vorrichtung nach irgendeinem der Ansprüche 1 bis. 5, **dadurch gekennzeichnet, daß** das Befestigungsstück (30) eine innere Fläche aufweist, die durch ein Element (46), gebildet wird, das aus einem Material zur Dämpfung mechanischer Schwingungen hergestellt ist.

7. Vorrichtung nach Anspruch 6, **dadurch gekennzeichnet, daß** das Befestigungsstück (30) einen Körper aufweist, an dem das Dämpfungselement (46) befestigt ist.

8. Vorrichtung nach irgendeinem der Ansprüche 1 bis 7, **dadurch gekennzeichnet, daß** das Befestigungsstück (30) ein Ring ist.

9. Unterbaugruppe für ein Fahrzeug, **dadurch gekennzeichnet, daß** sie eine Vorrichtung nach irgendeinem der Ansprüche 1 bis 8 aufweist.

10. Unterbaugruppe nach Anspruch 9, **dadurch gekennzeichnet, daß** sie eine Frontseite (2) aufweist, die den Träger bildet.

11. Unterbaugruppe nach Anspruch 10, **dadurch gekennzeichnet, daß** die Frontseite (2) aus Kunststoff hergestellt ist, der durch Fasern verstärkt ist.

12. Unterbaugruppe nach irgendeinem der Ansprüche 9 bis 11, **dadurch gekennzeichnet, daß** sie ein Kühlorgan (6) aufweist, das einen Zapfen (14) aufweist, der dazu eingerichtet ist, in der Öffnung (32) des Befestigungsstücks aufgenommen zu werden, das am Träger (2) angebracht ist, und zwar durch die bogenförmigen Ausschnitte (20, 36) hindurch.
